(19) Europäisches Patentamt
European Patent Office
Office européen des brevets

(11) Veröffentlichungsnummer : **0 167 776**
**B1**

(12) # EUROPÄISCHE PATENTSCHRIFT

(45) Veröffentlichungstag der Patentschrift : **05.04.89**

(51) Int. Cl.⁴ : **A 01 N 43/50** // (A01N43/50, 43:40, 33:12)

(21) Anmeldenummer : **85106560.7**

(22) Anmeldetag : **29.05.85**

(54) **Pflanzenwachstumsregulierende Mittel.**

(30) Priorität : **05.06.84 DE 3420832**

(43) Veröffentlichungstag der Anmeldung : **15.01.86 Patentblatt 86/03**

(45) Bekanntmachung des Hinweises auf die Patenterteilung : **05.04.89 Patentblatt 89/14**

(84) Benannte Vertragsstaaten : **AT BE CH DE FR GB IT LI NL SE**

(56) Entgegenhaltungen :
**DE-A- 3 217 094**
**DE-B- 2 207 575**
**US-A- 3 156 554**
**US-A- 3 395 009**

(73) Patentinhaber : **HOECHST AKTIENGESELLSCHAFT**
**Postfach 80 03 20**
**D-6230 Frankfurt am Main 80 (DE)**

(72) Erfinder : **Schulze, Ernst-Friedrich, Dr.**
**Lerchenweg 26**
**D-6238 Hofheim am Taunus (DE)**
Erfinder : **Bürstell, Helmut, Dr.**
**Am Hohlacker 65**
**D-6000 Frankfurt am Main 50 (DE)**
Erfinder : **Hacker, Erwin, Dr.**
**Herderstrasse 21**
**D-6203 Hochheim am Main (DE)**

**EP 0 167 776 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind pflanzenwachstumsregulierende Mittel, die eine Verbindung der Formel I

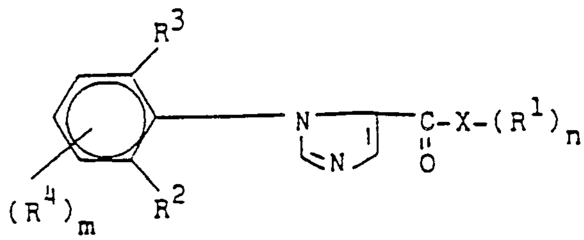

(I)

worin

X O, S oder N,

$R^1$ Wasserstoff, Phenyl, $(C_2$-$C_6)$-Alkenyl oder $(C_1$-$C_6)$-Alkyl, das ein- bis dreifach durch $(C_1$-$C_6)$-Alkoxy oder $(C_1$-$C_3)$-Dialkylamino oder durch Halogen substituiert sein kann, und im Falle X = O oder S auch ein Metall- oder ein Ammonium-Kation bedeuten kann,

n im Falle X = O, S die Zahl 1 und im Falle X = N die Zahl 1 oder 2 bedeuten kann, wobei im Falle n = 2 $R^1$ gleich oder verschieden sein kann,

$R^2$ und $R^3$ unabhängig voneinander $(C_1$-$C_4)$-Alkyl

$R^4$ bei gleicher oder verschiedener Bedeutung $(C_1$-$C_4)$-Alkyl, $(C_1$-$C_4)$ Alkoxy oder Halogen und

m die Zahl 0, 1, 2 oder 3 bedeuten

sowie für den Fall, daß $R^1$ nicht für ein Kation steht, deren Säureadditionssalze, Komplexsalze oder Quaternierungsprodukte in Kombination mit einer oder verschiedener Verbindungen der Formel II

$$R—CH_2—CH_2—N^+(CH_3)_3A^- \qquad (II),$$

worin R = OH oder Cl bedeutet, oder mit einer oder verschiedener Verbindung en der Formel III

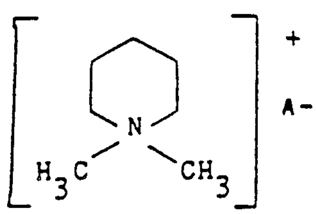

(III)

enthalten.

In (II) und (III) bedeutet A : Chlorid, Bromid, Nitrat oder 1/2 Sulfat.

Als Metall-Kationen für die Verbindungen der Formel I im Falle X = O oder S kommen insbesondere infrage Alkalimetall-, Erdalkalimetallkationen wie Na, K, Mg, Ca-Ionen.

Von den Säureadditionssalzen, Komplexsalzen und Quarternierungsprodukten der Verbindungen der Formel I seien genannt die Salze von organischen und anorganischen Säuren, wie Benzoate, Fumarate, Oxalate, Phenolate, Sulfonate, Nitrate, Chloride, Bromide und Sulfate, Komplexe mit Metallen der Gruppen I b, II b, IV b oder VIII des Periodensystems, etwa Kupfer, Zink und Zinn und Quaternierungsprodukte mit Alkyl — insbesondere $(C_1$-$C_6)$-Alkyl — und gegebenenfalls im Phenylrest substituierten, insbesondere halogenierten Phenacylhalogeniden.

Die Verbindungen der Formel I sowie ihre Salze, Komplexsalze und Quaternisierungsprodukte und deren pflanzenwachstumsregulierende Wirkung sind aus der DE-OS 32 17 094.7 bekannt. Beispielsweise seien folgende Verbindungen (1-13) der Formel I mit m = 0 genannt :

(Siehe Tabelle 1 Seite 3 f.)

Tabelle 1

| Verbindung | $X-(R^1)_n$ | $R^2$ | $R^3$ |
|---|---|---|---|
| 1 | $O-CH_3$ | $C_2H_5$ | $C_2H_5$ |
| 2 | $O-CH(CH_3)_2$ | " | " |
| 3 | $O-n-C_8H_{17}$ | " | " |
| 4 | O-Na | " | " |
| 5 | OH | " | " |
| 6 | OH·Hydrochlorid | " | " |
| 7 | $NH_2$ | " | " |
| 8 | $NH-CH-(CH_3)_2$ | " | " |
| 9 | $SC_2H_5$ | " | " |
| 10 | $O-[H_4N\ ]$ | " | " |
| 11 | O-K | " | " |
| 12 | O·1/2 Mg | " | " |
| 13 | OH | $CH_3$ | " |

Die Verbindungen der Formeln II und III sind bekannte Handelsprodukte. Die Verbindung der Formel II mit R = Cl (Verbindung IIa, Chlorethyltrimethylammonium-chlorid) besitzt den common name Chlormequat-chlorid oder CCC.

Die Verbindung der Formel III (1,1-Dimethylpiperidiniumchlorid) ist unter dem Namen Mepiquatchlorid bekannt. Die wachstumsregulatorischen Wirkungen der Verbindungen der Formeln II und III sind beschrieben in Plant Growth Regulator Handbook of the Plant Growth Regulator Working Group 2d. Ed. 1981.

Als Verbindungen der Formeln II und III können prinzipiell auch analoge Salze, die anstelle des Chlorids ein anderes für die Landwirtschaft einsetzbares Anion, wie beispielsweise Bromid, Nitrat oder 1/2 Sulfat enthalten, angewendet werden.

Bei der Kombination der Verbindungen der Formel I mit den Verbindungen der Formeln II oder III zeigten sich überraschenderweise auffallende synergistische Wirkungen. So lassen sich die erfindungsgemäßen Kombinationen in deutlich geringeren Dosierungen einsetzen, als von der Wirkung der Einzelkomponenten zu erwarten war, um die gewünschten Effekte zu erzielen. Die Effekte sind beispielsweise : Erhöhung der Standfestigkeit von Kulturpflanzen z. B. von Getreide, Mais, Reis, Soja, Hirse, Raps, Baumwolle, Wuchshemmung von Rasen, Beeinflussung von Pflanzeninhaltsstoffen, wie Kohlehydrate, Proteine, Erhöhung des Ertrages und Verbesserung des Blatt- und Fruchtfalles, insbesondere bei Zitrusfrüchten, oder Reduktion der Haltekraft. Mit den erfindungsgemäßen Kombinationen lassen sich auch Wildwuchserscheinungen vermindern, so daß die Kombinationen auch in der Landschaftspflege eingesetzt werden können.

Desweiteren eignen sich die erfindungsgemäßen Mittel hervorragend zur generellen Steuerung und Hemmung von unerwünschtem vegetativen Wachstum, wie Seitentriebsbildung, ohne die Pflanzen abzutöten.

Die Verbindungen der Formel I können auch vorteilhaft mit zwei verschiedenen Verbindungen der Formeln II oder III kombiniert werden, beispielsweise eine Verbindung der Formel I mit beiden Verbindungen, die unter die Formel II fallen.

Die Mischungsverhältnisse der Komponenten der Formel I zu den Verbindungen der Formeln II oder III können innerhalb weiter Grenzen, etwa zwischen 250 : 1 bis 1 : 10, schwanken. Die Wahl des Mischungsverhältnisses ist abhängig von der Art der Mischungspartner, vom Entwicklungsstadium der Pflanzen als auch vom Grad der gewünschten wachstumsregulatorischen Wirksamkeit. Vorzugsweise werden Mischdungsverhältnisse von 10 : 1 bis 1 : 10, insbesondere bevorzugt zwischen 1 : 1 und 1 : 10, gewählt.

Die Aufwandmenge der Verbindungen der Formel I in den Wirkstoffmischungen liegt im allgemeinen zwischen 0,05 und 2.5 kg/ha, die Aufwandmengen der Verbindungen der Formeln II und III variieren zwischen 0,01-5 kg/ha.

Die Gesamtaufwandmenge der Mischung liegt im Falle der Kombination I + II insbesondere im

Bereich von 0,25 bis 1,25 kg/ha, im Falle der Kombination I + III insbesondere zwischen 0,25 und 2,5 kg/ha.

Die erfindungsgemäßen Mittel können sowohl als Mischformulierungen der Komponenten — benetzbare Pulver, Emulsionskonzentrate — vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die erfindungsgemäßen Mittel können in den üblichen, dem Fachmann geläufigen Zubereitungen, z. B. als benetzbare Pulver, emulgierbare Konzentrate oder versprühbare Lösungen in den Handel gebracht werden. Die formulierten Mittel enthalten dabei die Wirkstoffkombinationen im allgemeinen im Bereich von 2 bis 95 Gew.-% neben üblichen Formulierungshilfsmitteln.

Benetzbare Pulver sind in Wasser gleichmäßig dispergierbare Präparate, die neben den Wirkstoffen außer einem Verdünnungs- oder Inertstoff noch Netzmittel, z. B. polyoxethylierte Alkylphenole, polyoxethylierte Oleyl- oder Stearylamine, polyoxethylierte Fettalkohole, Alkyl- oder Alkylphenyl-sulfonate und Dispergiermittel, z. B. ligninsulfonsaures Natrium, dinaphthylmethandisulfonsaures Natrium, dibutylnapthalinsulfonsaures Natrium oder auch oleylmethyltaurinsaures Natrium enthalten.

Emulgierbare Konzentrate werden durch Auflösen des Wirkstoffgemisches in einem organischen Lösungsmittel, z. B. Butanol, Cyclohexanon, Dimethylformamid, Xylol oder auch höhersiedenden Aromaten und Zusatz eines nichtionischen Netzmittels, beispielsweise eines polyäthylierten Alkylphenols oder eines polyoxäthylierten Oleyl- oder Stearylamins, erhalten.

Bei wachstumsregulatorischen Mitteln können die Konzentrationen der Wirkstoffe in den handelsüblichen Formulierungen verschieden sein. In benetzbaren Pulvern variiert die Wirkstoffkonzentration z. B. zwischen etwa 10 % und 95 %, der Rest besteht aus den oben angegebenen Formulierungszusätzen. Bei emulgierbaren Konzentraten ist die Wirkstoffkonzentration etwa 10 % bis 80 %. Staubförmige Formulierungen enthalten meistens 5 % bis 20 % an Wirkstoff, versprühbare Lösungen etwa 2 % bis 20 %. Bei Granulaten hängt der Wirkstoffgehalt zum Teil davon ab, in welcher Form (flüssig oder fest) die Wirkstoffe vorliegen und welche Granulierhilfsmittel, Füllstoffe usw. verwendet werden.

Zur Anwendung werden die handelsüblichen Konzentrate gegebenenfalls in üblicher Weise verdünnt, z. B. bei benetzbaren Pulvern und emulgierbaren Konzentraten mittels Wasser. Staubförmige und granulierte Zubereitungen sowie versprühbare Lösungen werden vor der Anwendung nicht mehr mit weiteren inerten Stoffen verdünnt. Mit den äußeren Bedingungen wie Temperatur, Feuchtigkeit u. a. variiert die erforderliche Aufwandmenge.

Die erfindungsgemäßen Mittel können mit Herbiziden, Fungiziden, Insektiziden und anderen Wachstumsregulatoren weiter kombiniert werden.

Ferner lassen sich die Verbindungen der Formel I neben den Verbindungen der Formeln II und III auch vorteilhaft mit folgenden Wachstumsregulatoren kombinieren : die Handelsprodukte Ancymidol (α-Cyclopropyl-4-methoxy-α-(pyrimidin-5-yl) benzylalkohol, Tetcyclacis (3aα, 4β, 4aα, 6aα, 7β, 7aα)-1(4-chlorphenyl)-3a, 4, 4a, 6a, 7, 7a-hexahydro-4,7-methano-1H-[1,2] diazeto [3,4-f] benzotriazol), Daminozide (Bernsteinsäure-mono(2,2-dimethylhydrazid), Mefluidid (5'-Trifluor-methansulfonamido) acet-2'-4'-xylidid), Maleinsäurehydrazid (« MH », 1,2-Dihydro-3,6-pyridazindion), Chlorflurenol (2-Chlor-9-hydroxy-9H-fluoren-9-carbonsäure) sowie die Entwickungsprodukte 1-(4-Chlorphenyl)-4,4-dimethyl-2-(1H-1,2,4-triazol-1-yl)-pentan-3-ol (« PP-333 ») und deren optische Isomere (Europ. Pat. Anmeldung 47,594), 1-(4-Chlorphenyl)-4,4-dimethyl-2-(1H-1,2,4-triazol-1-yl)-pent-1-en-3-ol (« S-327 D », « Uniconazole ») und deren Isomere (Europ. Pat. Anmeldung 54,431) sowie 1-Cyclohexyl-4,4-dimethyl-2-(1H-1,2,4-triazol-1-yl)-pent-1-en-3-ol (« RSW-411 ») und deren Isomere (DE-OS 3 102 588).

Die genannten Handelsprodukte werden in The Pesticide Manual, 7th Ed., British Corp. Protection Council, 1983 beschrieben. Die Verbindungen der Formel I lassen sich auch mit natürlichen oder synthetischen Pflanzenhormonen z. B. mit Auxinen wie α-Naphthylessigsäure oder Indolyl-3-essigsäure oder mit Cytokininen kombinieren.

A. Formulierungsbeispiele

Beispiel I

Eine wäßrige Lösung einer erfindungsgemäßen Kombination wird erhalten aus

20,0 Gew.-% techn. Wirkstoff der Formel I, X = O, $R^1$ = Na, n = 1
10,0 Gew.-% Wirkstoff der Formel II, R = OH
8,0 Gew.-% Dimethylformamid
10,0 Gew.-% Natriumlaurylsulfat
5,0 Gew.-% Isopropanol
47,0 Gew.-% Trinkwasser

Die Komponenten der Formeln I und II werden unter Rühren und leichtem Erwärmen bei 40 bis 50 °C gelöst und anschließend mit dem Emulgatoren versetzt. Bei 40 bis 50 °C wird 20 Minuten nachgerührt bis die Lösung klar und frei von Schlieren ist.

Beispiel II

Eine wäßrige Lösung einer Kombination wird erhalten aus

22,0 Gew.-% techn. Wirkstoff der Formel I, X =O, R' = $NH_4$, n =
8 Gew.-% Wirkstoff der formel III
10,0 Gew.-% Äthylenglykolnemomethyläther
10,0 Gew.-% äthoxyliertem Nonylphenol 10 AeO
5,0 Gew.-% Trinkwasser

Die Komponenten werden wie in Beispiel 1 angegeben bei 40-50 °C gelöst und ca. 20 Minuten nachgerührt.

Beispiel III

Ein in Wasser gut dispergierbares, benetzbares Pulver wird erhalten aus

20 Gew.-% techn. Wirkstoff der Formel I, X = O, $R^1$ = Na, n = 1
20 Gew.-% Wirkstoff der Formel I (R = Cl)
45 Gew.-% basischem Aluminiumsilikat (Kaolinit)
8 Gew.-% ligninsulfonsaurem Kalium
7 Gew.-% oleylmethyltaurinsaurem Natrium

Die Komponenten werden in einem Trommelmischer gut gemischt und anschließend auf einer Stiftmühle einmal bei 3 000 Upm gemahlen. Das dabei anfallende Mahlgut wird erneut gemischt und einmal bei 1 200 Upm gemahlen.

B. Biologische Beispiele

Im Freiland wurden die erfindungsgemäßen Kombinationen in Kleinparzellenversuchen hinsichtlich ihrer Wirkung auf verschiedene Getreidearten untersucht.

Die erfindungsgemäßen Mittel wurden im Nachauflaufverfahren bei verschiedenen Entwicklungsstadien der Pflanzen mit einem Wasseraufwandvolumen von 400 l/ha auf 10 $m^2$ große Versuchsparzellen appliziert. Jeder Versuch wurde viermal wiederholt. Die Pflanzen wurden im 14-tägigen Abstand nach der Applikation bontiert, wobei Phytotoxizität, Wuchshöhe und Entwicklungsverlauf untersucht wurden. Die Ergebnisse sind in der nachfolgenden Tabelle I angegeben.

Die Ergebnisse aus Tabelle I belegen die hervorragenden synergistischen Wirkungen der erfindungsgemäßen Kombinationen. Die beobachtete Wirkung (Halmverkürzung) ist wesentlich stärker, als auf Grund der Einzelwirkungen der Komponenten zu erwarten war. Diese synergistische Wirkung trat in einem breiten Bereich der pflanzlichen Entwicklung auf.

(Siehe Tabelle I Seite 6 f.)

Tabelle I

| Verbindung/ Kombination | Aufwandmenge kg a.i./ha | Wuchshemmung % bei Weizen | Gerste | Roggen | Hafer | Phytotoxizität |
|---|---|---|---|---|---|---|
| IIa | 0.6 | 8 | 0 | 3 | 3 | keine Schäden |
| III | 0.9 | 0 | 8 | 5 | 0 | keine Schäden |
| 1 | 0.6 | 7 | 7 | 5 | 6 | keine Schäden |
| 1 + IIa | 0.6 + 0.6 | 12 | 22 | 13 | 10 | keine Schäden |
| 1 + III | 0.6 + 0.9 | 14 | 20 | 11 | 11 | keine Schäden |
| 2 | 0.6 | 8 | 7 | 6 | 5 | keine Schäden |
| 2 + IIa | 0.6 + 0.6 | 18 | 27 | 14 | 14 | keine Schäden |
| 2 + III | 0.6 + 0.9 | 15 | 24 | 14 | 11 | keine Schäden |
| 5 | 0.06 | 0 | 0 | 0 | 0 | keine Schäden |
| 5 | 0.6 | 8 | 8 | 6 | 6 | keine Schäden |
| 5 + IIa | 0.06 + 0.6 | 18 | 24 | - | 13 | keine Schäden |
| 5 + IIa | 0.6 + 0.6 | 20 | 28 | 15 | 15 | keine Schäden |
| 5 + III | 0.6 + 0.9 | 15 | 24 | 15 | 12 | keine Schäden |
| 9 | 0.6 | 8 | 9 | 7 | 5 | keine Schäden |
| 9 + IIa | 0.6 + 0.6 | 15 | 25 | 14 | 14 | keine Schäden |
| 9 + III | 0.6 + 0.9 | 13 | 23 | 12 | 11 | keine Schäden |
| 10 | 0.6 | 8 | 8 | 6 | 6 | keine Schäden |
| 10 + IIa | 0.6 + 0.6 | 15 | 28 | 15 | 14 | keine Schäden |
| 10 + III | 0.6 + 0.9 | 16 | 25 | 12 | 12 | keine Schäden |
| 12 | 0.6 | 6 | 7 | 4 | 5 | keine Schäden |
| 12 + IIa | 0.6 + 0.6 | 17 | 18 | 14 | 15 | keine Schäden |
| 12 + III | 0.6 + 0.9 | 13 | 20 | 14 | 10 | keine Schäden |
| 11 | 0.06 | 0 | 0 | 0 | 0 | keine Schäden |
| 11 | 0.6 | 4 | 5 | 2 | 2 | keine Schäden |
| 11 + IIa | 0.06 + 0.6 | 12 | 13 | - | 10 | keine Schäden |
| 11 + IIa | 0.6 + 0.6 | 14 | 15 | 10 | 12 | keine Schäden |
| 11 + III | 0.6 + 0.9 | 10 | 17 | 12 | 11 | keine Schäden |

a. i. = Wirksubstanz ; Parzellengröße : 10 $m^2$ ; Wasseraufwandmenge : 400 l/ha
Applikationsstadium : Ende Bestockung, Beginn des Schossens
Bonitur : 4 Wochen nach Applikation
Verbindungen 1, 2, 5, 9, 10, 11, 12 s.S. 2 und 3 ; Verbindungen IIa und III s.S. 3

**Patentansprüche**

1. Pflanzenwachstumsregulierende Mittel, dadurch gekennzeichnet, daß sie eine Verbindung der Formel I,

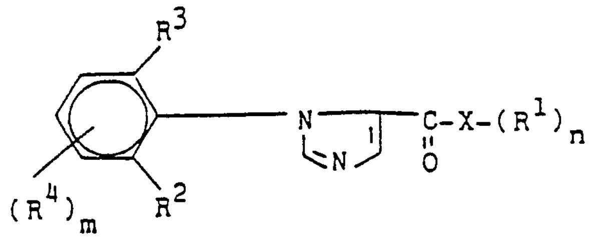

(I)

worin

X O, S oder N,

$R^1$ Wasserstoff, Phenyl, ($C_2$-$C_6$)-Alkenyl oder ($C_1$-$C_6$)-Alkyl, das ein- bis dreifach durch ($C_1$-$C_6$)-Alkoxy oder ($C_1$-$C_3$)-Dialkylamino oder durch Halogen substituiert sein kann, und im Falle X = O oder S auch ein Metall- oder Ammonium-Kation bedeuten kann,

n im Falle X = O, S die Zahl 1 und im Falle X = N die Zahl 1 oder 2 bedeuten kann, wobei im Falle n = 2 $R^1$ gleich oder verschieden sein kann,

$R^2$ und $R^3$ unabhängig voneinander ($C_1$-$C_4$)-Alkyl

$R^4$ bei gleicher oder verschiedener Bedeutung ($C_1$-$C_4$)-Alkyl, ($C_1$-$C_4$)-Alkoxy oder Halogen und

m die Zahl 0, 1, 2 oder 3 bedeuten

sowie für den Fall, daß $R^1$ nicht für ein Kation steht, derein Säureadditionssalze, Komplexsalze oder Quaternierungsprodukte in Kombination mit einer oder verschiedener Verbindungen der Formel II

$$R—CH_2—CH_2—N^+(CH_3)_3A^- \quad (II)$$

worin R = OH oder Cl bedeutet oder mit einer oder verschiedener Verbindungen der Formel III

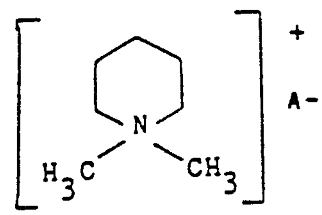

(III)

enthalten.

In den Formeln II und III bedeutet A : Chlorid, Bromid, Nitrat oder 1/2 Sulfat.

2. Pflanzenwachstumsregulierende Mittel gemäß Anspruch 1, dadurch gekennzeichnet, daß als Metall-Kationen für $R_1$ von Formel I Na, K, Mg oder Ca-Ionen eingesetzt werden.

3. Pflanzenwachstumsregulierende Mittel gemäß Ansprüchen 1 und 2, dadurch gekennzeichnet, daß das Mischungsverhältnis der Verbindungen der Formel I zu den Verbindungen der Formel II oder III im Bereich zwischen 250 : 1 und 1 : 10 variiert.

4. Pflanzenwachstumsregulierende Mittel gemäß Ansprüchen 1 bis 3, dadurch gekennzeichnet, daß das Mischungsverhältnis der Verbindungen der Formel I zu den Verbindungen der Formel II oder III im Bereich zwischen 10 : 1 bis 1 : 10 variiert.

5. Verfahren zur Pflanzenwachstumsregulierung, dadurch gekennzeichnet, daß man auf diese oder die Anbaufläche eine wirksame Menge eines Mittels gemäß Ansprüchen 1 bis 4 appliziert.

6. Verwendung eines Mittels gemäß Ansprüchen 1 bis 4 zur Wachstumsregulierung von Pflanzen.

**Claims**

1. A plant growth regulator which contains a compound of the formula I

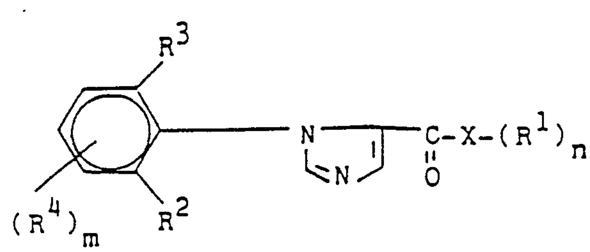

(I)

wherein

X denotes O, S or N,

R1 denotes hydrogen, phenyl, (C2-C6)-alkenyl or (C1-C6)-alkyl which can be monosubstituted to trisubstituted by (C1-C6)-alkoxy or (C1-C3)-dialkylamino or by halogen, and, when X = O or S, may furthermore denote a metal cation or an ammonium cation,

n can denote the number 1 when X = O or S, and the number 1 or 2 when X = N, the radicals R1 being identical or different when n = 2,

R2 and R3 independently of one another denote (C1-C4)-alkyl,

$R^4$ is identical or different and denotes (C1-C4)-alkyl, (C1-C4)-alkoxy or halogen, and

m denotes the number 0, 1, 2 or 3, and,

in the case in which R1 does not represent a cation, their acid addition salts, complex salts or quaternization products, in combination with one or various compounds of the formula II

$$R—CH_2—CH_2—N^+(CH_3)_3A^— \qquad (II)$$

wherein R denotes OH or Cl, or with one or various compounds of the formula III

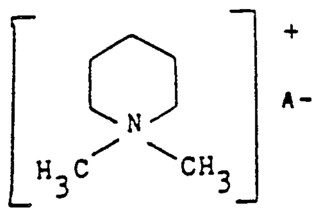

(III)

In the formula II and III A denotes chloride, bromide, nitrate or 1/2 sulfate.

2. A plant growth regulator as claimed in claim 1, wherein Na, K, Mg or Ca ions are employed as metal cations for R1 in formula I.

3. A plant growth regulator as claimed in claims 1 and 2 wherein the mixing ratio of the compounds of the formula I to the compounds of the formula II or III varies in the range between 250 : 1 and 1 : 10.

4. A plant growth regulator as claimed in claims 1 to 3, wherein the mixing ratio of the compounds of the formula I to the compounds of the formula II or III varies in the range between 10 : 1 and 1 : 10.

5. A method for regulating plant growth, wherein an effective amount of an agent as claimed in claims 1 to 4 is applied to these plants or the cultivated area.

6. Use of an agent as claimed in claims 1 to 4 for regulating the growth of plants.

**Revendications**

1. Produits régulateurs de la croissance de végétaux caractérisés en ce qu'ils comprennent un composé de formule I :

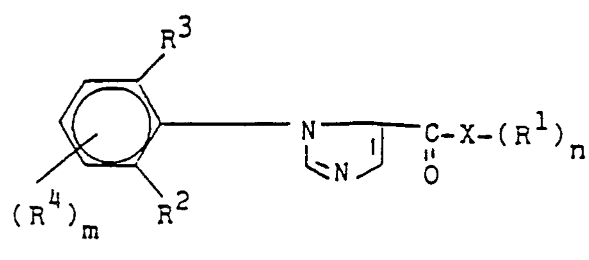

(I)

dans laquelle

X représente O, S ou N,

$R^1$ l'hydrogène, un phényle, un alcényle en $C_2$-$C_6$ ou un alkyle en $C_1$-$C_6$ pouvant porter de un à trois groupes alcoxy en $C_1$-$C_6$ ou dialkylamino à alkyles en $C_1$-$C_3$ ou atomes d'halogènes, ou encore, si X est l'oxygène ou le soufre, un cation de métal ou ammonium,

n si X est l'oxygène ou le soufre, est le nombre 1 et si X est l'azote, le nombre 1 ou 2, si n = 2 les $R^1$ pouvant être identiques ou différents l'un de l'autre,

$R^2$ et $R^3$ désignent chacun, indépendamment l'un de l'autre, un alkyle en $C_1$-$C_4$,

$R^4$ est un alkyle ou un alcoxy en $C_1$-$C_4$ ou un halogène et s'il y en a plusieurs ils peuvent être identiques ou différents, et

m est le nombre 0, 1, 2 ou 3)

ou bien si $R^1$ n'est pas un cation, un sel d'addition d'acide, un sel complexe ou un produit de quaternisation d'un tel composé, associé à un ou plusieurs composés de formule II :

$$R—CH_2—CH_2—N^+(CH_3)_3A^- \quad (II),$$

R désignant OH ou Cl, ou à un ou plusieurs composés de formule III :

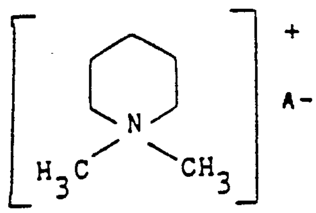

(III)

$A^-$, dans les formules II et III, désignant l'anion chlorure, bromure, nitrate ou hémisulfate.

2. Produits régulateurs de la croissance de végétaux selon la revendication 1 caractérisés en ce que le cation $R^1$ de la formule I est le cation Na, K, Mg ou Ca.

3. Produits régulateurs de la croissance de végétaux selon la revendication 1 ou 2 caractérisés en ce que le rapport de mélange entre les composés de formule I et ceux de formule II ou III est compris entre 250 : 1 et 1 : 10.

4. Produits régulateurs de la croissance de végétaux selon les revendications 1 à 3 caractérisés en ce que le rapport de mélange entre les composés de formule I et ceux de formule II ou III est compris entre 10 : 1 et 1 : 10.

5. Procédé de régulation de la croissance de plantes caractérisé en ce que l'on applique sur celles-ci ou sur le sol de mise en culture une quantité appropriée d'un produit selon l'une quelconque des revendications 1 à 4.

6. Utilisation d'un produit selon l'une quelconque des revendications 1 à 4 comme régulateur de la croissance de plantes.